# EUROPÄISCHE PATENTSCHRIFT

(11) **EP 0 795 515 B1**
(45) Veröffentlichungstag und Bekanntmachung des Hinweises auf die Patenterteilung: **28.10.1998**
(21) Anmeldenummer: 96103864.3
(22) Anmeldetag: 12.03.1996
(51) Int. Cl.: B67D 5/08, G01F 25/00

(54) **Verfahren und Vorrichtung zur Überwachtung und/oder Nacheichung von Kolbenmessern in Tankanlagen**
Method and apparatus for monitoring and/or calibration of piston flowmeters in petrol stations
Procédé et dispositif pour la surveillance et/ou l'étallonage des débitmètres à piston dans des installations de distribution de carburant

(43) Veröffentlichungstag der Anmeldung: 17.09.1997
(73) Patentinhaber: SCHEIDT & BACHMANN GMBH, D-41238 Mönchengladbach (DE)
(72) Erfinder: Miller, Gert, Dr., D-41063 Mönchengladbach (DE)
(74) Vertreter: Stenger, Watzke & Ring Patentanwälte

(56) Entgegenhaltungen:
- EP-A- 0 315 738
- FR-A- 2 688 881
- PATENT ABSTRACTS OF JAPAN vol. 8, no. 101 (P-273) [1538] , 12.Mai 1984 & JP 59 013920 A (TOMINAGA), 24.Januar 1984,

## Beschreibung

Die Erfindung betrifft ein Verfahren sowie eine Vorrichtung zur Überwachung und/oder Nacheichung von Kolbenmessern in Tankanlagen zur Abgabe flüssiger Kraftstoffe mit einer Mehrzahl von Zapfstellen, die jeweils mit mindestens einer Pumpe für jede Kraftstoffsorte und mindestens zwei jeder Pumpe zugeordneten Kolbenmessern ausgestattet sind, die für die Erfassung der jeweils abgegebenen Flüssigkeitsmenge jeweils einen Impulsgeber antreiben, dem ein Rechner zur Berechnung der abgegebenen Flüssigkeitsmenge und des zugehörigen Preises nachgeschaltet ist, wobei im Rechner für jeden Kolbenmesser ein Korrekturfaktor gespeichert ist, der die aufgrund unvermeidbarer Toleranzen entstehenden Abweichungen der tatsächlich abgegebenen Flüssigkeitsmenge von der mit Hilfe des Impulsgebers ermittelten Menge berücksichtigt.

Tankanlagen mit einer Mehrzahl von Zapfstellen zur Abgabe flüssiger Kraftstoffe sind in verschiedenen Ausführungen bekannt. Hierbei ist jede Zapfstelle mit mindestens einer Pumpe für jede Kraftstoffsorte und mit mindestens zwei jeder Pumpe zugeordneten Kolbenmessern ausgestattet, so daß die Kunden derartiger Tankanlagen an verschiedenen Zapfstellen unterschiedliche Kraftstoffsorten tanken können, beispielsweise unverbleite Ottokraftstoffe (Normal, Super, Super plus), verbleiten Superkraftstoff und Diesel, ggf. unterschiedlicher Qualität.

Zur Erfassung der jeweils abgegebenen Flüssigkeitsmenge treibt jeder Kolbenmesser jeweils einen Impulsgeber an, dessen Impulse einem Rechner zur Berechnung der abgegebenen Flüssigkeitsmenge und des zugehörigen Preises zugeführt werden. Da bei der Herstellung der Kolbenmesser Toleranzen unvermeidbar sind, die zu Abweichungen zwischen der tatsächlich abgegebenen Flüssigkeitsmenge und der vom Impulsgeber ermittelten Menge führen, wird im Rechner für jeden Kolbenmesser ein entsprechender Korrekturfaktor gespeichert, der bei der Ermittlung der abgegebenen Flüssigkeitsmenge und des zugehörigen Preises die Abweichungen des Istwertes vom Sollwert berücksichtigt.

Bei den vorbekannten Tankanlagen kann der im Rechner abgespeicherte Korrekturfaktor lediglich die bei der Inbetriebnahme der jeweiligen Zapfstelle vorhandenen, bei der Herstellung des jeweiligen Kolbenmessers aufgetretenen Toleranzen berücksichtigen. Um die durch Verschleiß entstehenden Abweichungen zwischen Soll- und Istwert bei der Mengen- und Preis-Ermittlung auszugleichen, ist es bei diesen Tankanlagen erforderlich, jeden Kolbenmesser zur Abgabe flüssiger Kraftstoffe periodisch zu überprüfen und ggf. nachzueichen, um den gesetzlichen Vorschriften zu genügen. Für diese Überwachung und ggf. Nacheichung werden fahrbare Eichgeräte verwendet. Für diese Überprüfung und ggf. Nacheichung müssen die jeweiligen Zapfstellen außer Betrieb gesetzt werden. Neben den hierdurch entstehenden Stillstandszeiten ergibt sich der Nachteil eines hohen personellen Aufwandes für die Überwachung und/oder Nacheichung der Kolbenmesser in den bekannten Tankanlagen.

Um unter Vermeidung fahrbarer Eichgeräte und des damit verbundenen personellen Aufwandes eine zentrale Überprüfung und ggf. Nacheichung durchführen zu können, ist bereits vorgeschlagen worden, die von einem Kolbenmesser abgegebene Flüssigkeitsmenge einem derselben Pumpe zugeordneten, von der Versorgung durch diese Pumpe abgetrennten Kolbenmesser zuzuführen und im geschlossenen Kreislauf an die Saugseite der Pumpe zurückzuführen, wobei einer der Kolbenmesser als Eichnormal zur Überwachung und/oder Nacheichung des jeweils anderen Kolbenmessers herangezogen wird.

Hiermit wird es möglich, den bisher periodisch vor Ort mit einer fahrbaren Eichvorrichtung durchzuführenden Überwachungsvorgang mit geringem technischen Aufwand durch eine Fernüberprüfung zu ersetzen, die innerhalb einer sehr kurzen Zeitspanne sowohl von einer zentralen Stelle der Tankanlage als auch aus großer Entfernung, beispielsweise von der Zentrale der Betreibergesellschaft aus durchgeführt werden kann. Da für die Überprüfung und ggf. Nacheichung vorhandene Kolbenmesser der Tankanlage verwendet werden, kann die Frist für die periodische Überprüfung erheblich verkürzt werden, ohne daß sich hierdurch ins Gewicht fallende Kosten ergeben. Für die Überprüfung ist es lediglich erforderlich, die vorhandenen, zu ein und derselben Pumpe gehörenden Kolbenmesser in der voranstehend beschriebenen Weise hintereinanderzuschalten. Da der Überprüfungsvorgang kurzfristig durchgeführt wird, entstehen nur kurze Stillstandszeiten für die jeweilige Zapfstelle.

Der Erfindung liegt die **Aufgabe** zugrunde, das voranstehend beschriebene Verfahren zur Überwachung und/oder Nacheichung von Kolbenmessern in Tankanlagen zur Abgabe flüssiger Kraftstoffe derart weiterzubilden, daß jegliche Stillstandszeiten der Tankanlage für die Überwachung und/oder Nacheichung ihrer Kolbenmesser vermieden werden kann.

Die **Lösung** dieser Aufgabenstellung durch die Erfindung ist dadurch gekennzeichnet, daß die von einem der Kolbenmesser während eines Betankungsvorganges abgegebene Flüssigkeitsmenge mindestens zwei derselben Pumpe oder einer anderen Pumpe derselben Kraftstoffart zugeordneten, von der Versorgung durch die zugehörige Pumpe abgetrennten Kolbenmessern zugeführt wird und die Meßergebnisse der Kolbenmesser zur Überwachung und/oder Nacheichung mindestens eines der Kolbenmesser herangezogen werden.

Durch die Hintereinanderschaltung mindestens dreier Kolbenmesser kann mit Hilfe einer Zwei- aus Drei-Auswertung die notwendige Überwachung und/oder Nacheichung jeweils eines der drei Kolbenmesser mit der erforderlichen Redundanz für die Fehlerbestimmung erfolgen, und zwar während eines Betankungsvorganges, so daß jegliche Stillstandszeiten für die Überwachung und ggf. Nacheichung der Kolbenmesser entfallen.

Gemäß einem weiteren Merkmal der Erfindung wird bei festgestellten Abweichungen der Korrekturfaktor des jeweils überwachten Kolbenmessers im Speicher des Rechners korrigiert, wofür kein großer Aufwand erforderlich ist, so daß mit dem erfindungsgemäßen Verfahren über die gesamte Betriebszeit der Tankanlage die erforderliche hohe Eichgenauigkeit sichergestellt werden kann. Beim erfindungsgemäßen Verfahren können Kolbenmesser derselben Kraftstoffart, aber unterschiedlicher Kraftstoffsorten hintereinandergeschaltet werden, beispielsweise die Kolbenmesser für die Kraftstoffart "bleifreier Ottokraftstoff"; diese Kraftstoffart umfaßt die Kraftstoffsorten "unverbleites Normal, unverbleites Super und unverbleites Super plus".

Bei einer bevorzugten Ausführungsform der Erfindung werden die Meßergebnisse der Überprüfung durch Datenfernübertragung dem Zentralrechner einer Überwachungsstelle zugeführt, der die Meßergebnisse mit den für jeden überwachten Kolbenmesser abgespeicherten Eichwerten vergleicht und bei relevanten Abweichungen den jeweiligen Korrekturfaktor verändert und im Speicher des dem jeweiligen Kolbenmesser zugeordneten Rechners ablegt. Durch diesen Einsatz des Zentralcomputers läßt sich beispielsweise durch Interpolation rechtzeitig voraussagen, wann ein Kolbenmesser verschlissen ist und ersetzt werden muß.

Bei der Vorrichtung zur Durchführung des erfindungsgemäßen Verfahrens ist saugseitig vor jeder Pumpe ein Rückschlagventil, zwischen der Pumpe und jedem Kolbenmesser ein fernbetätigbares Absperrventil und hinter jedem Kolbenmesser ein fernbetätigbares Zweiwegeventil angeordnet, das den Kolbenmesser entweder mit dem Zapfschlauch oder über eine Verbindungsleitung mit der Zuflußseite eines anderen Kolbenmessers verbindet. Die erfindungsgemäße Weiterbildung einer derartigen Vorrichtung besteht darin, daß in jeder Tankanlage ein Referenzmeßgerät angeordnet ist, das über ein vor einem der Zapfschläuche angeordnetes Zweiwegeventil und eine Verbindungsleitung in Reihe mit den Kolbenmessern geschaltet ist. Bei einem derartigen Referenzmeßgerät handelt es sich vorzugsweise um eine Rohrprüfstrecke, einen Turbinenzähler oder einen statischen Meßkolben.

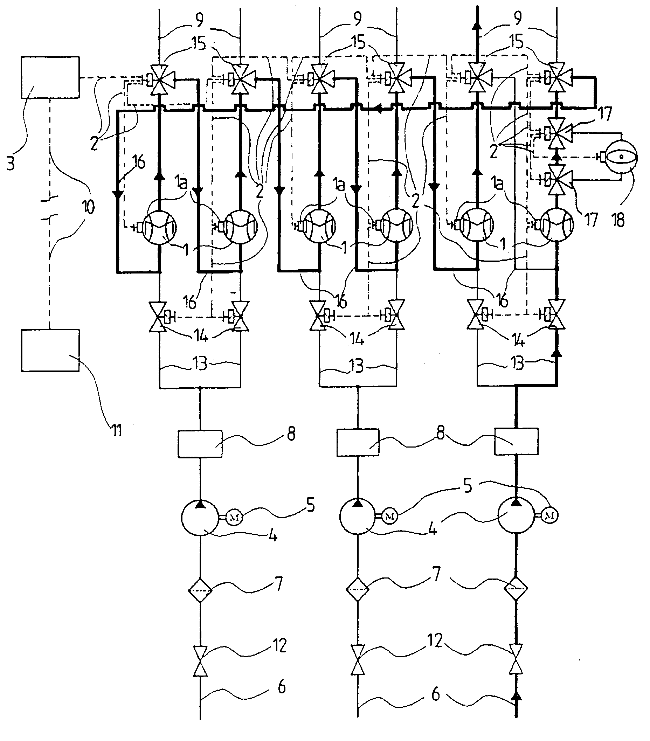

Auf der Zeichnung ist schematisch ein Ausführungsbeispiel der erfindungsgemäßen Vorrichtung dargestellt, mit dessen Hilfe nachfolgend das erfindungsgemäße Verfahren erläutert werden wird.

Auf der Zeichnung sind sechs zu einer gemeinsamen Zapfstelle einer im übrigen nicht dargestellten Tankanlage gehörende Kolbenmesser 1 zu erkennen, die jeweils einen Impulsgeber 1a antreiben. Jeder dieser Impulsgeber 1a ist über Steuerleitungen 2 mit einem Rechner 3 verbunden, der anhand der vom jeweiligen Impulsgeber 1a erhaltenen Impulse fortlaufend die Menge und den Preis des jeweils ausgegebenen Kraftstoffes errechnet und über eine auf der Zeichnung nicht dargestellte Anzeigevorrichtung anzeigt. Im Rechner 3 ist für jeden Kolbenmesser 1 ein Korrekturfaktor gespeichert, der die aufgrund bei der Herstellung unvermeidbarer Toleranzen entstehenden Abweichungen der tatsächlich abgegebenen Flüssigkeitsmenge von der mit Hilfe des Impulsgebers 1a ermittelten Menge berücksichtigt.

Jeweils zwei der auf der Zeichnung dargestellten sechs Kolbenmesser 1 werden parallel zueinander von einer gemeinsamen Pumpe 4 mit Kraftstoff versorgt. Beim Ausführungsbeispiel handelt es sich beispielsweise um die Kraftstoffsorten unverbleites Normalbenzin, unverbleites Super und unverbleites Super plus. Jede Pumpe 4 wird von einem Motor 5 angetrieben. Sie saugt den jeweiligen Kraftstoff über eine Ansaugleitung 6 aus einem auf der Zeichnung nicht dargestellten Tank, wobei vor der Pumpe 4 ein Filter 7 angeordnet und der Pumpe 4 ein Gasabscheider 8 nachgeordnet ist. Dieser Gasabscheider 8 stellt sicher, daß der die Kolbenmesser 1 antreibende Flüssigkeitsstrom keine Gasblasen enthält, die die durch den Kolbenmesser 1 bewirkte Volumenermittlung verfälschen.

Die den jeweiligen Kolbenmesser 1 verlassende Flüssigkeit wird jeweils einem Zapfschlauch 9 zugeführt, der an seinem Ende mit einem auf der Zeichnung nicht dargestellten Zapfventil versehen ist, durch das die Flüssigkeitsabgabe gesteuert werden kann. Beim Ausführungsbeispiel wird durch die beiden links dargestellten Zapfschläuche 9 unverbleites Normalbenzin, durch die beiden mittleren Zapfschläuche 9 unverbleiter Superkraftstoff und durch die beiden rechten Zapfschläuche 9 unverbleites Super plus ausgegeben. Um die im Rechner 3 ermittelten Daten weiterverarbeiten zu können, ist der Rechner 3 über Datenfernübertragungsleitungen 10 mit einem Zentralrechner 11 verbunden.

Um die Kolbenmesser 1 periodisch in vorgegebenen Zeitabständen hinsichtlich vorhandener, vorzugsweise durch Verschleiß entstandener Abweichungen überprüfen zu können, ist vor jeder Pumpe 4 ein Rückschlagventil 12 und zwischen jeder Pumpe 4 und jedem Kolbenmesser 1 in der jeweiligen Versorgungsleitung 13 ein Absperrventil 14 angeordnet. Hinter jedem Kolbenmesser 1 befindet sich vor dem Zapfschlauch 9 ein Zweiwegeventil 15. Sowohl bei den Absperrventilen 14 als auch bei den Zweiwegeventilen 15 handelt es sich um fernbetätigbare Ventile, vorzugsweise Magnetventile, welche über die Steuerleitungen 2 mit dem Rechner 3 verbunden sind und auf diese Weise vom Rechner 3 gesteuert, d.h. geöffnet oder geschlossen bzw. umgeschaltet werden können.

Jedes einem Kolbenmesser 1 nachgeschaltete Zweiwegeventil 15 ist über eine Verbindungsleitung 16 mit der Zuflußseite eines anderen Kolbenmessers 1 verbunden. Während die Verbindungsleitungen 16 von fünf Zweiwegeventilen 15 vor dem jeweils benachbarten Kolbenmesser 1 münden, verläuft die Verbindungsleitung 16 des am weitesten rechts gezeichneten Zweiwegeventils 15 zu dem am weitesten links gelegenen Kolbenmesser 1.

Im normalen Betrieb sind alle Absperrventile 14 offen und die Zweiwegeventile 15 derart geschaltet, daß jede Versorgungsleitung 13 mit dem zugehörigen Zapfschlauch 9 verbunden ist. Durch Betätigung beliebiger Zapfventile kann in dieser Stellung mit Hilfe der Pumpen 4 Kraftstoff aus den nicht dargestellten Lagertanks angesaugt und an das jeweils zu betankende Fahrzeug abgegeben werden. Durch die Saugleistung jeder Pumpe 4 wird hierbei das jeweilige Rückschlagventil 12 geöffnet.

Sofern einer der Kolbenmesser 1 mit dem Ziel einer ggf. notwendigen Nacheichung überprüft werden soll, wird beispielsweise bei der nächsten Abgabe von Super plus aus dem linken der beiden rechts in der Zeichnung eingezeichneten Zapfschläuche 9, der durch eine größere Strichstärke hervorgehoben ist, eine Hintereinanderschaltung sämtlicher Kolbenmesser 1 vorgenommen. Zu diesem Zweck wird das zum Zapfschlauch 9 gehörende Absperrventil 14 geschlossen und das in der parallelen Versorgungsleitung 13 für Super plus angeordnete Absperrventil 14 geöffnet. Die rechts in der Zeichnung erkennbare Pumpe 4 liefert somit Super plus über den rechten Kolbenmesser 1 zum rechten Dreiwegeventil 15 und von diesem über die Verbindungsleitung 16 zu dem am weitesten links liegenden Kolbenmesser 1. Da außer dem am weitesten rechts liegenden Absperrventil 14 alle anderen Absperrventile 14 geschlossen und die in den linken vier Zapfschläuchen 9 angeordneten Zweiwegeventile 15 jeweils so geschaltet sind, daß sie die Versorgungsleitung 13 vom zugehörigen Zapfschlauch 9 trennen und mit der zugehörigen Verbindungsleitung 16 verbinden, gelangt das von der rechten Pumpe 4 gelieferte Super plus über den am weitesten rechts erkennbaren Kolbenmesser 1 und anschließend nacheinander über die weiteren fünf Kolbenzähler 1 zu dem durch die größere Strichstärke hervorgehobenen Zapfschlauch 9. Die von den Impulsgebern 1a der Kolbenmesser 1 an den Rechner 3 gelieferten Meßwerte können somit verglichen und etwaige Abweichungen festgestellt werden. Die festgestellten Abweichungen führen hierbei zu einer Korrektur der im Speicher des Rechners 3 abgelegten Korrekturwerte für den jeweiligen Kolbenmesser 1. Da bei diesem Vorgang auf der Ausgangsseite der Rückschlagventile 12 Druck ansteht, schließen sämtliche Rückschlagventile 12 bis auf das am weitesten rechts befindliche Rückschlagventil 12.

Mit Hilfe der jedem Kolbenmesser 1 zugeordneten Impulsgeber 1a wird somit während eines normalen Zapfvorganges im Rechner 3 die die Kolbenmesser 1 durchströmende Flüssigkeitsmenge ermittelt. Sollten sich bei dieser Überprüfung Abweichungen ergeben, werden diese im Rechner 3 festgestellt und - bei Überschreiten eines gewissen Toleranzwertes - zur Veränderung des jeweiligen Korrekturfaktors benutzt, der im Rechner 3 für jeden Kolbenmesser 1 abgespeichert ist.

Da die Meßergebnisse der Überprüfung über die Datenfernübertragungsleitungen 10 dem Zentralrechner 11 mitgeteilt werden, kann von einer zentralen Überwachungsstelle aus eine Überprüfung der Meßergebnisse durchgeführt und an dieser zentralen Überwachungsstelle entschieden werden, ob nach einem Eichwertvergleich bei relevanten Abweichungen der jeweilige Korrekturfaktor des Kolbenmessers 1 im Rechner 3 verändert werden soll. Da die Umschaltung der Ventile 14 und 15 kurzfristig durchgeführt werden kann, ist jederzeit eine Überprüfung und ggf. Nacheichung der Kolbenmesser 1 möglich.

Bei dem in der Zeichnung dargestellten Ausführungsbeispiel sind in der am weitesten rechts dargestellten Versorgungsleitung 13 zwei zusätzliche Zweiwegeventile 17 angeordnet, durch die ein Referenzmeßgerät 18 in Reihe mit den Kolbenmessern 1 geschaltet werden kann. Bei diesem Referenzmeßgerät 18 handelt es sich beispielsweise um eine Rohrprüfstrecke, einen Turbinenzähler oder einen statischen Meßkolben. Da dieses Referenzmeßgerät 18 nicht nur eine hohe Genauigkeit besitzt, sondern im Normalfall nicht in die Kraftstoffausgabe eingeschaltet ist und damit keinem Verschleiß unterliegt, ist es mit diesem Referenzmeßgerät 18 möglich, eine Überprüfung und ggf. Nacheichung der Kolbenmesser 1 mit höchster Präzision, und zwar ebenfalls während eines normalen Zapfvorganges vorzunehmen.

### Bezugszeichenliste:

- 1: Kolbenmesser
- 1a: Impulsgeber
- 2: Steuerleitung
- 3: Rechner
- 4: Pumpe
- 5: Motor
- 6: Ansaugleitung
- 7: Filter
- 8: Gasabscheider
- 9: Zapfschlauch
- 10: Datenfernübertragungsleitung
- 11: Zentralrechner
- 12: Rückschlagventil
- 13: Versorgungsleitung
- 14: Absperrventil
- 15: Zweiwegeventil
- 16: Verbindungsleitung
- 17: Zweiwegeventil
- 18: Referenzmeßgerät

## Patentansprüche

1. Verfahren zur Überwachung und/oder Nacheichung von Kolbenmessern (1) in Tankanlagen zur Abgabe flüssiger Kraftstoffe mit einer Mehrzahl von Zapfstellen, die jeweils mit mindestens einer Pumpe (4) für jede Kraftstoffsorte und mindestens zwei jeder Pumpe (4) zugeordneten Kolbenmessern (1) ausgestattet sind, die für die Erfassung der jeweils abgegebenen Flüssigkeitsmenge jeweils einen Impulsgeber (1a) antreiben, dem ein Rechner (3) zur Berechnung der abgegebenen Flüssigkeitsmenge und des zugehörigen Preises nachgeschaltet ist, wobei im Rechner (3) für jeden Kolbenmesser (1) ein Korrekturfaktor gespeichert ist, der die aufgrund unvermeidbarer Toleranzen entstehenden Abweichungen der tatsächlich abgegebenen Flüssigkeitsmenge von der mit Hilfe des Impulsgebers (1a) ermittelten Menge berücksichtigt,
**dadurch gekennzeichnet,**
daß die von einem der Kolbenmesser (1) während eines Betankungsvorganges abgegebene Flüssigkeitsmenge mindestens zwei derselben Pumpe (4) oder einer anderen Pumpe (4) derselben Kraftstoffart zugeordneten, von der Versorgung durch die zugehörige Pumpe (4) abgetrennten Kolbenmessern (1) zugeführt wird und die Meßergebnisse der Kolbenmesser (1) zur Überwachung und/oder Nacheichung mindestens eines der Kolbenmesser (1) herangezogen werden.

2. Verfahren nach Anspruch 1, dadurch gekennzeichnet, daß bei festgestellten Abweichungen der Korrekturfaktor des jeweils überwachten Kolbenmessers (1) im Speicher des Rechners (3) korrigiert wird.

3. Verfahren nach Anspruch 1 oder 2, dadurch gekennzeichnet, daß die Meßergebnisse der Überprüfung durch Datenfernübertragung dem Zentralrechner (11) einer Überwachungsstelle zugeführt werden, der die Meßergebnisse mit den für jeden überwachten Kolbenmesser (1) abgespeicherten Eichwerten vergleicht und bei relevanten Abweichungen den jeweiligen Korrekturfaktor verändert und im Speicher des dem jeweiligen Kolbenmesser (1) zugeordneten Rechners (3) ablegt.

4. Vorrichtung zur Durchführung des Verfahrens nach einem der Ansprüche 1 bis 3, wobei saugseitig vor jeder Pumpe (4) ein Rückschlagventil (12), zwischen der Pumpe (4) und jedem Kolbenmesser (1) ein fernbetätigbares Absperrventil (14) und hinter jedem Kolbenmesser (1) ein fernbetätigbares Zweiwegeventil (15) angeordnet ist, das den Kolbenmesser (1) entweder mit dem Zapfschlauch (9) oder über eine Verbindungsleitung (16) mit der Zuflußseite eines anderen Kolbenmessers (1) verbindet, dadurch gekennzeichnet, daß in jeder Tankanlage ein Referenzmeßgerät (18) angeordnet ist, das über ein vor einem der Zapfschläuche (9) angeordnetes Zweiwegeventil (15) und eine Verbindungsleitung (16) in Reihe mit den Kolbenmessern (1) geschaltet ist.

5. Vorrichtung nach Anspruch 4, dadurch gekennzeichnet, daß das Referenzmeßgerät (18) als Rohrprüfstrecke, Turbinenzähler oder statischer Meßkolben ausgebildet ist.

## Claims

1. Method for monitoring and/or recalibrating piston flowmeters (1) in petrol stations for delivering liquid fuels, having a plurality of filling points which are respectively provided with at least one pump (4) for each grade of fuel and at least two piston flowmeters (1) assigned to each pump (4), which flowmeters in each case drive a pulse generator (1a) for registering the amount of liquid delivered in each case, downstream of which generator there is connected a computer (3) for calculating the amount of liquid delivered and the associated price, a correction factor which takes into account the deviations between the amount of liquid actually delivered and the amount determined with the aid of the pulse generator (1a), occurring because of unavoidable tolerances, being stored in the computer (3) for each piston flowmeter (1), characterized in that the amount of liquid delivered during a filling-up procedure by one of the piston flowmeters (1) is fed to at least two piston flowmeters (1) assigned to the same pump (4) or to another pump (4) of the same fuel type and separated from the supply by the relevant pump (4), and the measurement results of the piston flowmeters (1) are used to monitor and/or recalibrate at least one of the piston flowmeters (1).

2. Method according to Claim 1, characterized in that, when deviations are established, the correction factor of the respectively monitored piston flowmeter (1) in the memory of the computer (3) is corrected.

3. Method according to Claim 1 or 2, characterized in that the measurement results of the check are fed by remote data transmission to the central computer (11) of a monitoring point, which compares the measurement results with the calibration values stored for each monitored piston flowmeter (1) and, if there are relevant deviations, changes the respective correction factor and stores it in the memory of the computer (3) assigned to the respective piston flowmeter (1).

4. Apparatus for carrying out the method according to one of Claims 1 to 3, there being arranged on the suction side before each pump (4) a non-return valve (12), between the pump (4) and each piston flowmeter (1), a remote-controllable shut-off valve (14) and after each piston flowmeter (1), a remote-controllable two-way valve (15), which connects the piston flowmeter (1) either to the filling hose (9) or via a connection line (16) to the inflow side of another piston flowmeter (1), characterized in that in each petrol station there is arranged a reference measuring device (18) connected in series with the piston flowmeters (1) via a two-way valve (15) arranged before one of the filling hoses (9) and via a connection line (16).

5. Apparatus according to Claim 4, characterized in that the reference measuring device (18) is designed as a tubular testing section, a turbine counter or a static measuring piston.

## Revendications

1. Procédé de contrôle et/ou de réétalonnage de débitmètres à piston (1) dans des installations de distribution de carburant destinées à la délivrance de carburants liquides et comportant plusieurs postes distributeurs qui sont tous équipés d'au moins une pompe (4) par sorte de carburant et d'au moins deux débitmètres à piston (1) associés à chaque pompe (4), qui, afin d'enregistrer la quantité de liquide délivrée à chaque fois, entraînent chacun un générateur d'impulsions (1a) en aval duquel est monté un calculateur (3) servant à calculer la quantité de liquide délivrée et le prix correspondant, un coefficient de correction, qui prend en considération les écarts qui apparaissent entre la quantité de liquide effectivement délivrée et la quantité déterminée à l'aide du générateur d'impulsions (1a) et qui se produisent en raison de tolérances inévitables, étant mémorisé dans le calculateur (3) pour chaque débitmètre à piston (1),
caractérisé en ce que la quantité de liquide délivrée par l'un des débitmètres à piston (1) pendant un processus de ravitaillement est amenée à au moins deux débitmètres à piston (1) associés soit à la même pompe (4) soit à une autre pompe (4) du même type de carburant, et séparés de l'alimentation par la pompe associée (4), et en ce que les résultats de mesure des débitmètres à piston (1) servent au contrôle et/ou au réétalonnage d'au moins un des débitmètres à piston (1).

2. Procédé selon la revendication 1, caractérisé en ce que, lorsque des écarts sont constatés, le coefficient de correction du débitmètre à piston contrôlé (1) est corrigé dans la mémoire du calculateur (3).

3. Procédé selon la revendication 1 ou 2, caractérisé en ce que les résultats de mesure de la vérification sont envoyés par télétransmission de données au calculateur central (11) d'un poste de contrôle, calculateur central qui compare les résultats de mesure aux valeurs d'étalonnage mémorisées pour chaque débitmètre à piston contrôlé (1) et qui, en cas d'écarts significatifs, modifie le coefficient de correction concerné et le place dans la mémoire du calculateur (3) associé au débitmètre à piston concerné (1).

4. Dispositif servant à mettre en oeuvre le procédé selon l'une des revendications 1 à 3, dans lequel un clapet antiretour (12) est disposé devant chaque pompe (4) côté aspiration, une vanne d'arrêt (14) pouvant être commandée à distance est disposée entre la pompe (4) et chaque débitmètre à piston (1), et une vanne à deux voies (15) pouvant être commandée à distance, et qui relie le débitmètre à piston (1) soit au tuyau distributeur (9) soit au côté arrivée d'un autre débitmètre à piston (1) par l'intermédiaire d'un conduit de raccordement (16), est disposée derrière chaque débitmètre à piston (1), caractérisé en ce qu'un appareil de mesure de référence (18), mis en série avec les débitmètres à piston (1) par l'intermédiaire d'une vanne à deux voies (15) disposée devant l'un des tuyaux distributeurs (9) et d'un conduit de raccordement (16), est disposé dans chaque installation de distribution de carburant.

5. Dispositif selon la revendication 4, caractérisé en ce que l'appareil de mesure de référence (18) est de préférence réalisé sous forme de section de contrôle tubulaire, de compteur à turbine ou de piston de mesure statique.
